(19) Europäisches Patentamt / European Patent Office / Office européen des brevets

(11) **EP 3 176 550 B1**

(12) **EUROPEAN PATENT SPECIFICATION**

(45) Date of publication and mention
of the grant of the patent:
**04.08.2021 Bulletin 2021/31**

(21) Application number: **15829643.4**

(22) Date of filing: **10.06.2015**

(51) Int Cl.:
***G01H 11/08*** *(2006.01)*

(86) International application number:
**PCT/CN2015/081118**

(87) International publication number:
**WO 2016/019755 (11.02.2016 Gazette 2016/06)**

(54) **SURFACE-ACOUSTIC WAVE RESONATOR TYPE VIBRATION SENSOR AND VIBRATION DETECTION SYSTEM**

SCHWINGUNGSSENSOR VOM OBERFLÄCHENSCHALLWELLENRESONATORTYP UND SCHWINGUNGSDETEKTIONSSYSTEM

CAPTEUR DE VIBRATIONS DU TYPE RÉSONATEUR À ONDES ACOUSTIQUES DE SURFACE ET SYSTÈME DE DÉTECTION DE VIBRATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2014 CN 201410376053**

(43) Date of publication of application:
**07.06.2017 Bulletin 2017/23**

(73) Proprietor: **MESNAC CO., LTD.**
**Shibei District**
**Qingdao**
**Shandong 266042 (CN)**

(72) Inventors:
• **DONG, Lanfei**
**Qingdao**
**Shandong 266042 (CN)**
• **TENG, Xuezhi**
**Qingdao**
**Shandong 266042 (CN)**
• **CHEN, Haijun**
**Qingdao**
**Shandong 266042 (CN)**
• **WEI, Jiangbo**
**Qingdao**
**Shandong 266042 (CN)**
• **SUN, Peifeng**
**Qingdao**
**Shandong 266042 (CN)**

(74) Representative: **KIPA AB**
**P O Box 1065**
**251 10 Helsingborg (SE)**

(56) References cited:
**WO-A1-01/66367      CN-A- 102 889 923**
**CN-A- 102 889 923      CN-A- 103 630 233**
**GB-B- 2 126 034      JP-A- 2009 243 982**
**US-A- 4 760 352      US-A1- 2004 159 154**

• **None**

**Description**

**Technical Field**

The present invention relates to a surface acoustic wave sensor, and particularly, relates to a surface acoustic wave resonator type vibration sensor.

**Background**

Surface acoustic wave (SAW) resonator can be classified into resonator type and delay line type based on functions of the chip devices. Single port surface acoustic wave resonator belongs to surface acoustic wave sensor type. It comprises a central interdigital transducer (IDT) and reflection gratings which are symmetrically distributed along two sides of the interdigital transducer. The central interdigital transducer and the reflection gratings which are distributed along two sides are used to form an acoustic resonant cavity; the interdigital transducer is used to conduct the sound-electronic interconversion.

Radio frequency identification (RFID) technology is a technology applying contactless identification, which automatically identifies targeted objects through radio frequency signals and obtains relative data. Surface acoustic wave RFID technology belongs to delay line type surface acoustic wave sensor.

In modern logistics, some goods, such as china, glass products, pharmaceuticals and etc., are vibration sensitive. Those goods will be damaged or lose effectiveness under serious vibration. Real-time monitor of the vibration status is needed during the transportation of those goods. Particularly, whether the vibration exceeds the threshold value during the transportation procedure should be recorded. Once the vibration acceleration exceeds a pre-set threshold value, the time when the over-threshold vibration of the goods happens should be recorded, or a warning signal should be sent to the monitor system so that remedial measures can be adopted.

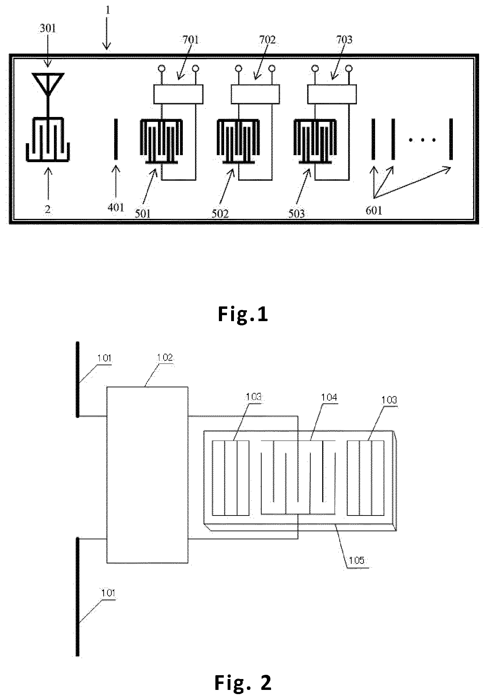

China patent application with the publication number of CN102889923A, discloses a vibration sensor based on sound acoustic wave RFID technology and its application, which adopts a sound acoustic wave RFID delay line structure to measure the vibration acceleration. As shown in Figure 1, said vibration sensor comprises a sound acoustic wave device and a reader. The sound acoustic wave device comprises a first antenna 301, a piezoelectric substrate 1, an interdigital transducer 2, a reflection grating and an elastic component, and said first antenna 301, interdigital transducer 2 and reflection grating are all set on the piezoelectric substrate 1. Said first antenna 301 connects to the interdigital transducer 2. The elastic component connects to the measurement reflection grating and constitute a normal open circuit. When the sensed vibration acceleration exceeds a pre-set threshold, the measurement reflection grating and the elastic component and the matching network constitute a close circuit together. That patent adopts a surface acoustic wave RFID delay line structure, in which the reflection grating locates at one side of the interdigital transducer. The disadvantages of this structure is: 1. The reflection grating can only monitor one acceleration value when the elastic component is set on the reflection grating. If multiple acceleration values need to be monitored, multiple reflection gratings need to be set. Piezoelectric substrate with bigger area is needed to set those reflection gratings. First, the manufacture costs of the sensors are raised; and besides that, the volume of the sensor is increased, not suitable for the demand of miniaturization in the market. 2. Surface acoustic wave delay line structure induces dual-direction energy loss. Since one side of the surface acoustic wave RFID delay line structure does not comprise the reflection grating, when surface acoustic wave transfer energy to the two side of the interdigital transducer, the surface acoustic wave energy is lost in one side, and in another side, the surface acoustic wave energy cannot efficiently reflect back to the interdigital transducer with increased distance between reflection grating and the interdigital transducer, leading to a problem of high insertion loss, and corresponding lower flexibility and liability , and corresponding shorter wireless enquiry distance of the reader.

**Summary**

To solve the technical problem that existing surface acoustic wave sensors occupy a big volume, the present invention according to the appended claims provides a surface acoustic wave resonator type vibration sensor.

To solve the above-mentioned technical problem, the present invention according to the appended claims adopts the following technical solution:

One surface acoustic wave resonator type vibration sensor, comprising a first antenna, a matching network, a reflection grating, and an interdigital transducer, at least said reflection grating and said interdigital transducer being set on the piezoelectric substrate, and said matching network comprising an optimal matching network which is composed of at least one capacitor and at least one inductor, and said optimal matching network connecting an acceleration detection circuit in parallel, and said acceleration detection circuit comprising several branch circuits which are connected in parallel, and different number of branch circuits being connected to said optimal matching network under different acceleration conditions.

Furthermore, said optimal matching network is composed of a first capacitor (C1) and a first inductor (L1) which are connected in series, and said acceleration detection circuit connects in parallel with the two ends of the series circuit which is composed by said optimal matching network.

Or, said optimal matching network is composed of a first capacitor (C1) and a first inductor (L1) which are connected in series, and said acceleration detection circuit connects in parallel to two ends of said first capacitor (C1).

Or, said optimal matching network is composed of a first capacitor (C1) and a first inductor (L1) which are connected in series, and said acceleration detection circuit connects in parallel to two ends of said first inductor (L1).

Furthermore, said piezoelectric substrate and the surface acoustic wave resonator composed of the reflection grating and the interdigital transducer on the piezoelectric substrate connect in parallel to two ends of the first capacitor (C1).

Or, said piezoelectric substrate and the surface acoustic wave resonator composed of the reflection grating and the interdigital transducer on the piezoelectric substrate connect in parallel to two ends of the first inductor (L1).

Furthermore, an elastic switch component is set in each branch circuit of said acceleration detection circuit.

Another, said elastic switch component is a spring or a reed, and when the acceleration in the deformation direction of said spring or reed reaches the threshold, said spring or reed deforms to make the branch circuit that it locates to conduct.

Preferably, each branch circuit of said acceleration detection circuit comprises multiple capacitors and/or inductors connected in series.

Based on the above-mentioned surface acoustic wave resonator type vibration sensor, the present invention also provides a vibration detection system of surface acoustic wave resonator type, comprising a reader, a signal processing module, and a vibration sensor. A second antenna is set on said reader. And the above-mentioned surface acoustic wave resonator type vibration sensor is included in the system.

Additionally, the present invention also comprises a monitor platform to monitor the feedback signal from the vibration sensor, and said monitor platform receives the information sent by the signal processing module.

Another, the present invention comprises an alarm device connected to the monitor platform.

In comparison to prior arts, advantages and positive effects of the present invention are: with the setup of the acceleration detection circuit in the matching network, the surface acoustic wave resonator type vibration sensor of present invention has a simple circuit structure, occupies a small space, does not require extra area on piezoelectric substrate, and is beneficial to costs saving.

With the concrete description of embodiments of the present invention in conjunction with the figures, other characters and advantages of the present invention can be clearer.

**Brief Description of Drawings**

In order to clearly describe the embodiments of the present invention or the technical solutions in the prior arts, the drawings which are needed for the description of the embodiments and the prior arts are briefly described as follows. Obviously, the drawings of the below descriptions are merely embodiments of the present invention. To the persons skilled in the art, other drawings can be obtained in accordance with these drawings without further creative efforts.

Figure 1 is the schematic diagram of a vibration sensor in the prior art;
Figure 2 is the structural schematic diagram of one embodiment of the surface acoustic wave resonator type vibration sensor raised by the present invention;
Figure 3 is the circuit schematic block diagram of the vibration sensor in Figure 2;
Figure 4 is the structural schematic diagram of the elastic switch component in one embodiment of the surface acoustic wave resonator type vibration sensor raised by the present invention;
Figure 5 is the circuit schematic diagram of one embodiment of the matching network in Figure 3;
Figure 6 is the equivalent circuit model diagram of the matching network circuit in Figure 5;
Figure 7 is the equivalent circuit model diagram of the resonator in Embodiment 3;
Figure 8 is the system schematic diagram of one embodiment of the surface acoustic wave resonator type vibration detection system raised in the present invention.

**Description of Embodiment**

In conjunction with the figures in the present invention's embodiments, technical solutions of the present invention's embodiments are clearly and completely described as follows. Based on the embodiments in the present invention, other embodiments derived by the persons skilled in the art without further creative efforts are within the protection scope of the present invention.

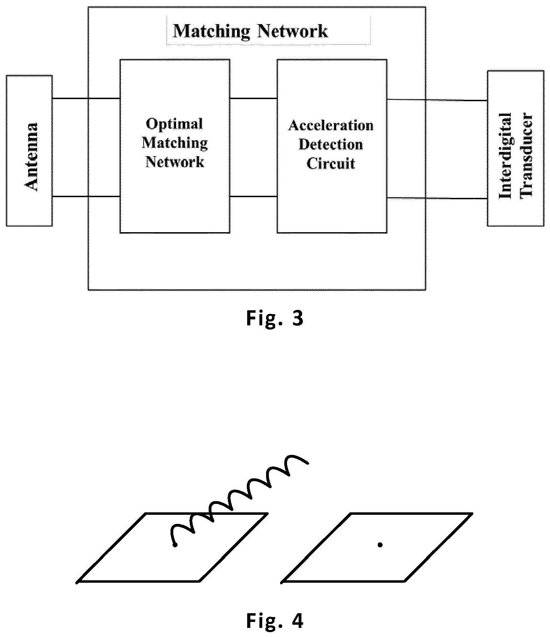

Embodiment 1, as shown in Figure 2, the present embodiment provides a surface acoustic wave resonator type vibration sensor, comprising a first antenna 101, a matching network 102, a reflection grating 103, and an interdigital transducer 104, and at least the reflection grating 103 and the interdigital transducer 104 being set on the piezoelectric substrate 105. As shown in Figure 3, the matching network 102 comprises an optimal matching network composed by at least one capacitor and at least one inductor. This optimal matching network connects an acceleration detection circuit in parallel. Said acceleration detection circuit comprises multiple branch circuits which are connected in parallel. Different number of branch circuits are connected to said optimal matching network under different acceleration conditions. Working principle of the surface acoustic wave resonator type vibration sensor is: the antenna 101 receives an actuating signal; the matching network has an extra acceleration detection circuit, and when the acceleration of object to be measured in one direction reaches the threshold, the acceleration detection circuit connects the branch circuit corresponding to this particular acceleration. The number of branch circuit that be connected to the matching network by the acceleration circuit changes under different acceleration conditions. Thus the center frequency of the signal that be transferred from the matching network to the interdigital transducer also changes. Therefore, the central frequency of the signal that be reflected by the reflection grating and sent by the interdigital transducer changes correspondingly. Because the branch circuit to be connected by the acceleration detection circuit under a particular acceleration condition is fixed and the variation of the signal central frequency caused by the branch circuit is also fixed, the acceleration value can be analyzed and obtained from measurement value of the central frequency of the signal sent by the vibration sensor. With the setup of the acceleration detection circuit in the matching network, the surface acoustic wave resonator type vibration sensor of present invention has a simple circuit structure, occupies a small space, does not require extra area on piezoelectric substrate, and is beneficial to costs saving.

It should be specified that, the function of the matching network 102 in the circuit is: during the procedure of sensor passive wireless measurement in the present embodiment, the resonator is composed of the reflection grating 103 and the interdigital transducer 104; the resonator needs to conduct impedance matching with the first antenna 101, and send the activating signal received by the first antenna 101 to the resonator; otherwise, the energy loss will be enormous, seriously influencing transmission efficiency and quality of the signal; thus, the matching network is needed between the first antenna and the resonator, and the matching network is usually composed of inductor(s) and capacitor(s) which are connected in parallel. The resonator receives the matched activating signal sent by the matching network, and the interdigital transducer conducts the electronic-sound interconversion to produce surface acoustic wave, which spreads to two sides. The surface acoustic wave reflects when it reaches the reflection grating, and leads to a superposition and forms a stationary wave within the resonant cavity. The resonator stores energy when it is activated by external signals. And, when the external activation signal disappears, the interdigital transducer conducts the sound-electronic interconversion to release the response signal of the resonator. The structure of the resonator is simple; it only needs an interdigital transducer and sets one reflection grating on each side of the interdigital transducer, occupying a small space of the piezoelectric substrate.

Embodiment 2, the present embodiment provides one circuit schematic diagram of one embodiment of the surface acoustic wave resonator type vibration sensor. As shown in Figure 3, the optimal matching network is composed of a first capacitor C1 and a first inductor L1 connected in parallel, and the acceleration detection circuit connects in parallel to two ends of the parallel circuits composed by said optimal matching network.

According to the invention, elastic switch component is set in each branch circuit of said acceleration detection circuit. As shown in Figure 4, the elastic switch component is a spring or a reed, and when the acceleration in the deformation direction of said spring or reed reaches the threshold, said spring or reed deforms to make the branch circuit that it locates to conduct. Of course, the acceleration threshold at which the spring or the reed can make its branch circuit into a conductive status is fixed. Moreover, the threshold value of the elastic switch component in each branch circuit is different.

Each branch circuit of the acceleration detection circuit connects several capacitors and/or inductors in series, which can change the signal central frequency. The way of combination and the number of the capacitors or inductors can be set to fulfill that the reader can accurately read the variation of the central frequency of the resonator.

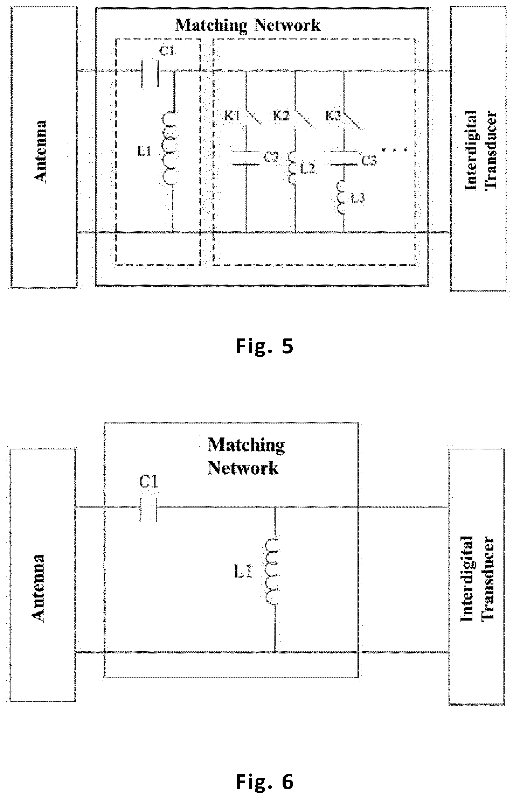

Embodiment 3, the present embodiment provides a circuit schematic diagram of the surface acoustic wave resonator type vibration sensor; as shown in Figure 5, the optimal matching network is composed of a first capacitor C1 and a first inductor L1 connected in parallel, and said acceleration detection circuit is connected in parallel to the two ends of the first inductor L1.

In the current embodiment, the acceleration detection circuit comprises several branch circuits which are connected in parallel, wherein, from the left to the right, the first branch circuit connects an elastic switch component K1 and a capacitor C2 in series; a second branch circuit connects an elastic switch component K2 and an inductor L2 in series; a third branch circuit connects an elastic switch component K3, a capacitor C3 and an inductor L3 in series. In the present embodiment, the elastic switch components K1-K3 are all selected from the springs in passive acceleration sensor. The elastic switch components K1-K3 connect to reactance components and form a normal open circuit. And the critical acceleration threshold of three elastic switch components K1-K3 in horizontal directions are respectively a1=3g, a2=4g, a3=5g. When the sensed vibration acceleration reaches a pre-set threshold of a certain elastic switch component, the elastic switch component forms a closed loop together with the reactance components and the matching network. For example, when the vibration acceleration in the horizontal direction of the measured objective is smaller than 3g, K1, K2, and K3 are all in open state, and the measured resonator central frequency does not change. When the vibration acceleration in the horizontal direction of the measured objective is bigger than 3g but smaller than 4g, the corresponding K1 is in close state, constituting a close loop, while K2 and K3 are in open state. Because the value of the reactance component changes in the matching network, a change of Δf1 is induced to the measured central frequency of the resonator. When the vibration acceleration in the horizontal direction of the measured objective is bigger than 4g but smaller than 5g, the corresponding K1 and K2 are both in close state, constituting close loops, while K3 is in open state, and then resonators' central frequency has a change of Δf2. When the vibration acceleration in the horizontal direction of the measured objective is bigger than 5g, the corresponding K1, K2, and K3 are all in close state, constituting close loops, and then the resonators' central frequency has a change of Δf3.

As shown in Figure 6, the matching network is composed of C1 and L1 which are connected in series, the interdigital transducer connects to L1 in parallel.

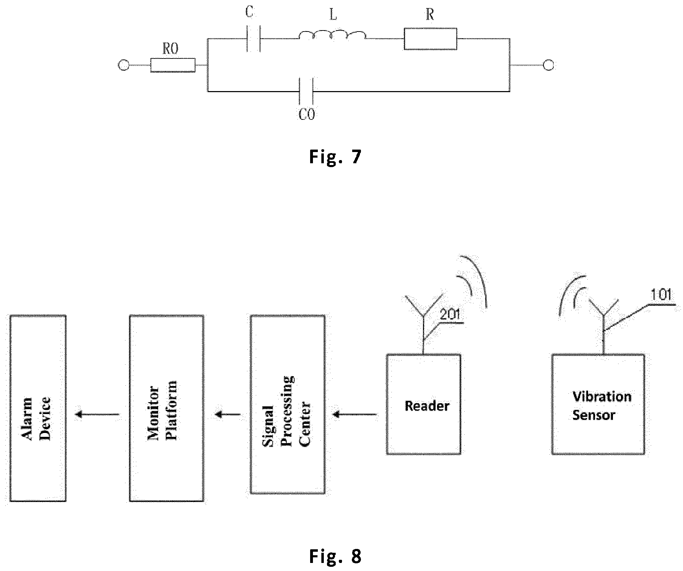

The equivalent circuit model of generic resonator of the resonator is illustrated in Figure 7. C and L in Figure 7 are respectively dynamic capacitor and inductor induced by elasticity and inertia of piezoelectric substrates. R is the dynamic resistance raised by damping, and C0 is the static capacitor of the interdigital transducer; and R0 is the lead wire resistance. The equivalent circuit of the resonator comprises 5 parameters, including R0, R, L, C and C0.

The method to calculate the impedance of the resonator Zeq1 is:

$$Zeq1 = R0 + jwC0 + \cfrac{1}{R + jwL + \cfrac{1}{jwC}} \qquad (1)$$

$$w = 2\pi f \qquad (2)$$

Zeq2 is the impedance of resonator Zeq1 and L1 connected in parallel, therefore,

$$Zeq2 = \cfrac{1}{\cfrac{1}{Zeq1} + \cfrac{1}{jwL1}} \qquad (3)$$

The total impedance of the structure equals to the impedance of Zeq2 and capacitor C1 connected in series:

$$Zeq = Zeq2 + \frac{1}{jwC1} \qquad (4)$$

In general, the characteristic impedance of commonly used transmission line is 50Ω, and the matching point is corresponding to the central frequency of S11, which is the frequency with the smallest amplitude. The reflection coefficient is:

$$S11 = \frac{Zeq - 50}{Zeq + 50} \qquad (5)$$

Relationship curve of the S11 and frequency f can be obtained from the above equations (1-5). The frequency with the smallest amplitude f0 corresponds to the central frequency of S11. In the matching network, if the capacitor or the inductor of the external sensor is connected to the network, the equivalent value of C1 or L1 will be changed and the value of Zeq2 will be influenced, and finally the curve chart of S11 will be influenced. The frequency f0 with the smallest amplitude, i.e. the central frequency of the whole resonator structure changes correspondingly.

Similarly, if the optimal matching network is composed of a first capacitor C1 and a first inductor L1 connected in parallel, and said acceleration detection circuit is connected in parallel to the two ends of the first inductor L1, the central frequency of the resonator structure can be changed when different branch circuit of the acceleration detection circuit is set and the equivalent value of C1 is changed.

Embodiment 4, based on the surface acoustic wave resonator type vibration sensor in the embodiments 3, the present invention provides a vibration detection system of surface acoustic wave resonator type. As shown in Figure 8, the system comprises a reader, a signal processing module, and vibration sensor. Said reader comprises a second antenna 201 and said vibration sensor comprises a first antenna 101; and these two communicate with each other through antennas. As shown in Figure 2, the vibration sensor also comprises a matching network 102, a reflection grating 103, and an interdigital transducer 104, in which at least the reflection grating 103 and the interdigital transducer 104 are assembled onto the piezoelectric substrate 105. As shown in Figure 3, the matching network 102 comprises an optimal matching network which is composed of at least one capacitor C1 and at least one inductor L1. Said optimal matching network also connects an acceleration detection circuit in parallel, and said acceleration detection circuit comprises several branch circuits connected in parallel. Different number of branch circuits is connected to said optimal matching network under different acceleration conditions. The principle of the vibration detection system of surface acoustic wave resonator type of the present embodiment is: the reader sends an activated signal to the vibration sensor through the second antenna 201, and the vibration sensor receives the activated signal through the first antenna 101, and through an additional acceleration detection circuit in the matching network of the vibration sensor, when the acceleration of measured object in one direction reaches the threshold, the acceleration detection circuit connects the branch circuit corresponding to this particular acceleration. The number of branch circuit that be connected to the matching network by the acceleration circuit changes under different acceleration conditions. Thus the center frequency of the signal that be transferred from the matching network to the interdigital transducer also changes. Therefore, the central frequency of the signal that be reflected by the reflection grating and sent by the interdigital transducer changes correspondingly. The interdigital transducer 104 transmits the signal after resonance to the reader. The reader transmits this signal to the signal processing center to process. At last the signal processing center can detect the frequency changes after temperature compensation based on the environment temperature, the change of which will cause frequency drift of the SAW resonator sensor. Because the branch circuit to be connected by the acceleration detection circuit under a particular acceleration condition is fixed and the variation of the signal central frequency caused by the branch circuit is also fixed, the acceleration value can be analyzed and obtained from measurement value of the central frequency of the signal sent by the vibration sensor.

To monitor the acceleration of the vibration sensor, the present invention also comprises a monitor platform to monitor the feedback signal from the vibration sensor, and said monitor platform receives the information sent by the signal processing module. Besides that, the present invention also comprises an alarm device connected to the monitor platform, giving an alarm signal when the acceleration of the vibration sensor exceed a pre-set threshold.

The following will describe the present invention by adopting the vibration sensor in the embodiment 3 as an example.

As shown in Figure 5, the optimal matching network of the vibration sensor of the present embodiment is composed of a first capacitor C1 and a first inductor L1 which are connected in series, said acceleration measurement circuit connects to the two ends of the first inductor L1 in parallel. Said acceleration detection circuit comprises multiple branch circuits connected in parallel, wherein, from the left to the right, the first branch circuit connects an elastic switch component K1 and a capacitor C2 in series; a second branch circuit connects an elastic switch component K2 and an inductor L2 in series; a third branch circuit connects an elastic switch component K3, a capacitor C3 and an inductor L3 in series. In the present embodiment, the elastic switch components K1-K3 are all selected from the springs in passive acceleration sensor. The elastic switch components K1-K3 connect to reactance components and form a normal open circuit. And the critical acceleration threshold of three elastic switch components K1-K3 in horizontal directions are respectively a1=3g, a2=4g, a3=5g. When the sensed vibration acceleration reaches a pre-set threshold of a certain elastic switch component, the elastic switch component forms a closed loop together with the reactance components and the matching network. For example, when the vibration acceleration in the horizontal direction of the measured objective is smaller than 3g, K1, K2, and K3 are all in open state, and the measured resonator central frequency does not change. When the vibration acceleration in the horizontal direction of the measured objective is bigger than 3g but smaller than 4g, the corresponding K1 is in close state, constituting a close loop, while K2 and K3 are in open state. Because the value of the reactance component changes in the matching network, a change of Δf1 is induced to the measured central frequency of the resonator. The monitor platform regards the vibration status of the measured objective as being within the acceptable normal range. When the vibration acceleration in the horizontal direction of the measured objective is bigger than 4g but smaller than 5g, the corresponding K1 and K2 are both in close state, constituting close loops, while K3 is in open state, and then resonators' central frequency has a change of Δf2. The monitor platform still regards the vibration status of the measured objective as being within the acceptable normal range. When the vibration acceleration in the horizontal direction of the measured objective is bigger than 5g, the corresponding K1, K2, and K3 are all in close state, constituting close loops, and then the resonators' central frequency has a change of Δf3. At last the signal processing center can detect the frequency changes after temperature compensation based on the environment temperature, the change of which will cause frequency drift of the SAW resonator sensor. The measured frequency changes will be compared with the stored frequency values which are corresponded to acceleration values and the process result will be fed back to the monitor platform. The monitor platform monitor the feedback result, if the acceleration exceeds 5g and has abnormal changes, the alarm device will give an alarm response. The alarm method can just be normal alarm methods, such as utilizing sound and light to alarm.

Claims

1. A surface acoustic wave resonator type vibration sensor, comprising a first antenna (101), a matching network (102), a reflection grating (103), and an interdigital transducer (104), with at least said reflection grating (103) and said interdigital transducer (104) assembled on a piezoelectric substrate (105), **characterized in that** the surface acoustic wave resonator type vibration sensor comprises an acceleration detection circuit and wherein said matching network (102) comprises an optimal matching network which is composed of at least one capacitor (C1) and at least one inductor (L1), said optimal matching network connecting the acceleration detection circuit in parallel, said acceleration detection circuit comprising multiple branch circuits connected in parallel, and when a measured acceleration in one direction reaches a threshold, the acceleration detection circuit connects the branch circuit corresponding to this particular acceleration, whereby a different number of said multiple branch circuits are connected to said optimal matching network under different acceleration conditions;
   wherein each branch circuit comprises an elastic switch component (K1, K2, K3) and a capacitor (C2, C3) and/or an inductor (L2, L3) connected in series.

2. The surface acoustic wave resonator type vibration sensor in claim 1, **characterized in that** the capacitor (C1) and the inductor (L1) are connected in a series circuit; and said acceleration detection circuit is connected in parallel with the two ends of the series circuit.

3. The surface acoustic wave resonator type vibration sensor in claim 1, **characterized in that** the capacitor (C1) and the inductor (L1) are connected in series; and said acceleration detection circuit is connected in parallel with the two ends of the capacitor (C1).

4. The surface acoustic wave resonator type vibration sensor in claim 1, **characterized in that** the capacitor (C1) and the inductor (L1) which are connected in series; and said acceleration detection circuit is connected in parallel with the two ends of the inductor (L1).

5. The surface acoustic wave resonator type vibration sensor in claim 1, **characterized in that** said elastic switch component (K1, K2, K3) is a spring or a reed, and when the acceleration in the deformation direction of said spring or reed reaches the threshold, said spring or reed deforms to make the branch circuit that it locates to conduct.

6. A vibration detection system of surface acoustic wave resonator type, **characterized in** comprising the surface acoustic wave resonator type vibration sensor in accordance with any one of claims 1-5, a reader, a signal processing module, a second antenna (201) set on said reader.

7. The vibration detection system of surface acoustic wave resonator type in claim 6, **characterized in** comprising a monitor platform to monitor the feedback signal from the vibration sensor, and said monitor platform receives the information sent by the signal processing module.

8. The vibration detection system of surface acoustic wave resonator type in claim 7, **characterized in** also comprising an alarm device connected to the monitor platform.

Patentansprüche

1. Ein Schwingungssensor vom Typ Oberflächenwellen-Resonator mit einer ersten Antenne (101), einem Anpassungsnetzwerk (102), einem Reflektionsgitter (103) und einem Interdigitaltransducer (104), wobei zumindest das besagte Reflektionsgitter (103) und der besagte Interdigitaltransducer (104) auf einem piezoelektrischen Substrat (105) montiert sind, **dadurch gekennzeichnet, dass** der Schwingungssensor vom Typ Oberflächenwellen-Resonator einen Kreis zur Beschleunigungserkennung aufweist, wobei besagtes Anpassungsnetzwerk (102) ein optimales Anpassungsnetzwerk umfasst, das aus mindestens einem Kondensator und mindestens einer Spule besteht, wobei besagtes optimales Anpassungsnetzwerk den Kreis zur Beschleunigungserkennung parallel anschließt und besagter Kreis zur Beschleunigungserkennung mehrere parallel angeschlossene Zweigstromkreise aufweist und, wenn eine gemessene Beschleunigung in eine Richtung einen Schwellenwert überschreitet, der Kreis zur Beschleunigungserkennung den dieser bestimmten Beschleunigung entsprechenden Zweigstromkreis anschließt, wodurch eine andere Anzahl der besagten Mehrzahl von Zweigstromkreisen an besagtes optimales Anpassungsnetzwerk unter unterschiedlichen Beschleunigungsbedingungen angeschlossen werden,
wobei jeder Zweigstromkreis ein elastisches Schaltbauteil (K1 K2, K3) und einen Kondensator (C2, C3) und/oder eine Spule (L2, L3) in serieller Schaltung umfasst.

2. Der Schwingungssensor vom Typ Oberflächenwellen-Resonator gemäß Anspruch 1, **dadurch gekennzeichnet, dass** der Kondensator (C1) und die Spule (L1) seriell geschaltet sind und besagter Kreis zur Beschleunigungserkennung parallel an die beiden Enden des seriellen Kreises angeschlossen ist.

3. Der Schwingungssensor vom Typ Oberflächenwellen-Resonator gemäß Anspruch 1, **dadurch gekennzeichnet, dass** der Kondensator (C1) und die Spule (L1) seriell angeschlossen sind und besagter Kreis zur Beschleunigungserkennung parallel an die beiden Enden des Kondensators (C1) angeschlossen ist.

4. Der Schwingungssensor vom Typ Oberflächenwellen-Resonator gemäß Anspruch 1, **dadurch gekennzeichnet, dass** der Kondensator (C1) und die Spule (L1) seriell geschaltet sind und besagter Kreis zur Beschleunigungserkennung parallel an die beiden Enden der Spule (L1) angeschlossen ist.

5. Der Schwingungssensor vom Typ Oberflächenwellen-Resonator gemäß Anspruch 1, **dadurch gekennzeichnet, dass** es sich bei dem elastischen Schaltbauteil (K1 K2, K3) um eine Feder oder eine Zunge handelt und, wenn die Beschleunigung in Verformungsrichtung besagter Feder oder Zunge einen Schwellenwert erreicht, besagte Feder oder Zunge sich verformt und dadurch den entsprechenden Zweigstromkreis unter Spannung setzt.

6. Ein System zur Erkennung von Schwingungen vom Typ Oberflächenwellen-Resonator, **dadurch gekennzeichnet, dass** es einen Schwingungssensor vom Typ Oberflächenwellen-Resonator gemäß einem der Ansprüche 1-5, eine Lesevorrichtung, ein Modul zur Signalverarbeitung und eine zweite, auf der besagten Lesevorrichtung angebrachte Antenne (201) enthält.

7. Das System zur Erkennung von Schwingungen vom Typ Oberflächenwellen-Resonator gemäß Anspruch 6, **dadurch gekennzeichnet, dass** es eine Kontrollplattform zur Kontrolle des Rücksignals vom Schwingungssensor enthält und besagte Kontrollplattform die vom Modul zur Signalverarbeitung gesendeten Informationen empfängt.

8. Das System zur Erkennung von Schwingungen vom Typ Oberflächenwellen-Resonator gemäß Anspruch 7, **dadurch gekennzeichnet, dass** es eine ebenfalls an die Kontrollplattform angeschlossene Alarmvorrichtung enthält.


**Revendications**

1. Capteur de vibrations de type résonateur à ondes acoustiques de surface, comprenant une première antenne (101), un réseau d'adaptation (102), un réseau de fils (103), et un transducteur interdigité (104), au moins ledit réseau de fils (103) et ledit transducteur interdigité (104) étant assemblés sur un substrat piézoélectrique (105), **caractérisé en ce que** le capteur de vibrations de type résonateur à ondes acoustiques de surface comprend un circuit de détection d'accélération et où ledit réseau d'adaptation (102) comprend un réseau d'adaptation optimal lequel est composé d'au moins un condensateur (C1) et d'au moins une bobine d'inductance (L1), ledit réseau d'adaptation optimal et le circuit de détection d'accélération étant branchés en parallèle, ledit circuit de détection d'accélération comprenant de multiples circuits de dérivation branchés en parallèle, et lorsqu'une accélération mesurée dans une direction atteint un seuil, le circuit de détection d'accélération ferme le circuit de dérivation correspondant à cette accélération particulière, grâce à quoi un nombre différent desdits multiples circuits de dérivation sont branchés audit réseau d'adaptation optimal dans différentes conditions d'accélération ; où chaque circuit de dérivation comprend un composant de commutation élastique (K1, K2, K3) et un condensateur (C2, C3) et/ou une bobine d'inductance (L2, L3) branchés en série.

2. Capteur de vibrations de type résonateur à ondes acoustiques de surface selon la revendication 1, **caractérisé en ce que** le condensateur (C1) et la bobine d'inductance (L1) sont branchés selon un circuit série ; et ledit circuit de détection d'accélération est branché en parallèle aux deux bornes du circuit série.

3. Capteur de vibrations de type résonateur à ondes acoustiques de surface selon la revendication 1, **caractérisé en ce que** le condensateur (C1) et la bobine d'inductance (L1) sont branchés en série ; et ledit circuit de détection d'accélération est branché en parallèle aux deux bornes du condensateur (C1).

4. Capteur de vibrations de type résonateur à ondes acoustiques de surface selon la revendication 1, **caractérisé en ce que** le condensateur (C1) et la bobine d'inductance (L1) sont branchés en série ; et ledit circuit de détection d'accélération est branché en parallèle aux deux bornes de la bobine d'inductance (L1).

5. Capteur de vibrations de type résonateur à ondes acoustiques de surface selon la revendication 1, **caractérisé en ce que** ledit composant de commutation élastique (K1, K2, K3) est un ressort ou une lame, et lorsque l'accélération dans la direction de déformation dudit ressort ou de ladite lame atteint le seuil, ledit ressort ou ladite lame se déforme pour fermer le circuit de dérivation sur lequel il ou elle est situé.

6. Système de détection de vibrations de type résonateur à ondes acoustiques de surface, **caractérisé par** le fait de comprendre le capteur de vibrations de type résonateur à ondes acoustiques de surface selon l'une quelconque des revendications 1 à 5, un lecteur, un module de traitement de signal, une seconde antenne (201) placée sur ledit lecteur.

7. Système de détection de vibrations de type résonateur à ondes acoustiques de surface selon la revendication 6, **caractérisé par** le fait de comprendre une plateforme de surveillance pour surveiller le signal de retour émanant du capteur de vibrations, et ladite plateforme de surveillance reçoit l'information envoyée par le module de traitement de signal.

8. Système de détection de vibrations de type résonateur à ondes acoustiques de surface selon la revendication 7, **caractérisé par** le fait de comprendre également un dispositif d'alarme branché à la plateforme de surveillance.

**Fig.1**

**Fig. 2**

**Matching Network**

| Antenna | Optimal Matching Network | Acceleration Detection Circuit | Interdigital Transducer |

**Fig. 3**

**Fig. 4**

**Fig. 5**

**Fig. 6**

**Fig. 7**

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102889923 A